# EUROPEAN PATENT SPECIFICATION

(11) **EP 1 882 230 B1**
(45) Date of publication and mention of the grant of the patent: **26.09.2018**
(21) Application number: 06743337.5
(22) Date of filing: 19.04.2006
(51) Int. Cl.: G06K 7/00, G06K 7/10, G06K 7/08, H04B 7/06, H04B 7/08

(54) **TRANSCEIVER ANTENNA ARRANGEMENT**
SENDER-/EMPFÄNGERANTENNEN-ANORDNUNG
AGENCEMENT D'ANTENNES EMETTEURS-RECEPTEURS

(30) Priority: 19.05.2005 GB 0510208
(43) Date of publication of application: 30.01.2008
(73) Proprietor: Siemens Aktiengesellschaft, 80333 München (DE)
(72) Inventor: DOMOKOS, John, Budapest 1012 (HU); HUISH, David William, Winchester SO22 4DW (GB); SHERRY, David, Alresford, Hampshire SO24 9PX (GB)
(74) Representative: Maier, Daniel Oliver
(86) International application number: PCT/EP2006/061662
(87) International publication number: WO 2006/122861

(56) References cited:
- EP-A- 0 364 190
- EP-A- 0 696 113
- EP-A- 1 153 369
- EP-A1- 1 315 306
- US-A- 5 809 405
- US-A- 5 842 118

## Description

This invention relates to tranceivers and has particular but not exclusive applications to transceivers which transmit signals and also receives the reflected signals therefrom or receives signals wherein the transmitted signal has been modulated by a passive object such as a tag.

Radio frequency identification devices (RFIDs) are passive devices, also known as tags, which are used for identification purposes. They may be located on items such as consumer goods. RFID systems typically comprise a reader which comprises a transmitter and receiver, and one or more antennas to transmit and receive signals from the tag.

In passive RFID systems the tag is energised by the reader, typically by a continuous wave (CW) RF field transmitted via an antenna of the reader. The reader to tag communication is arranged by modulating the CW signal. The tag decodes this and responds by back scattering the transmitted CW. The back scattered signals is received by an antenna and decoded in the receiver.

In a typical system the power of the transmitted signal is in the order of 100mW - 2W and the back scattered signal is recovered with a homodyne receiver. The received signal is very weak, in the order of InW - 100nW depending on the distance between the reader and the tag.

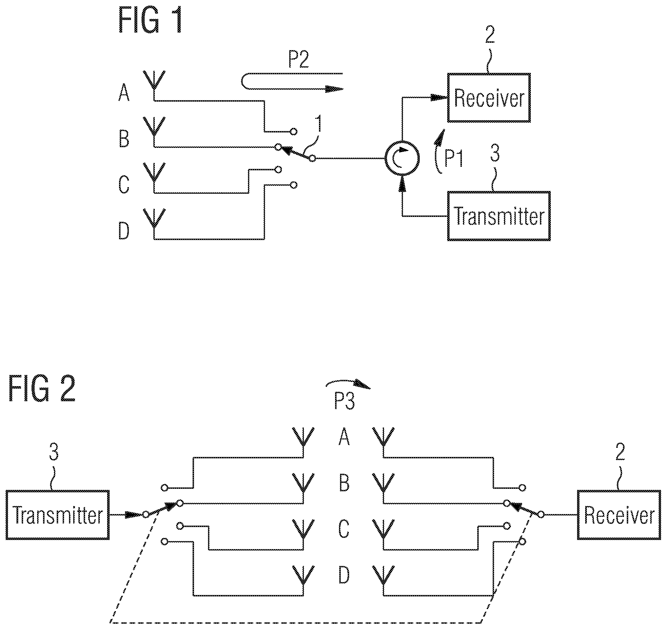

Figure 1 shows a prior art arrangement of a typical reader. In this example four antenna A, B, C and D are used to interrogate the tag. It includes a transmitter 3 and receiver 2. If the path from antenna A to the tag is obstructed (or impaired by multi-path propagation) the switch selects antenna B. For example if the reader is located on a fork lift truck the antennae may be located at various points on the truck and antennae proximal to the tag may have better transmission/reception than those antenna distal thereto. The switch 1 cycles through all antennae until the communication between the reader and the tag has been successfully completed.

The problem with this arrangement is that the receiver 2 is desensitised by the transmitted (own) signal. This signal leaks through the circulator PI because of the finite isolation of a practical device. Furthermore some of the transmitted signal is reflected back from the antenna because of the return loss limitation of the antenna and cabling. The transmitter receiver isolation (sum of PI and P2) is in the order of 15-25 dB; this limits the reading range of this type of reader to about 1-3m.

A known improvement is to isolate the transmitter and receiver. Such an arrangement is shown schematically in figure 2. In this example there are separate antennae for the transmitter and the receiver and thus the aforementioned desensitisation problem is greatly reduced. The isolation (P3) is typically 30 - 40 dB which means that typically
the reading range is increased to 3 to 10 m. The disadvantage with such a system is that twice as many antennae are required. This means that the hardware and the installation costs of this system are higher.

It is an object of the invention to provide for transceiver means having effective isolation and which reduces the inherent cost of prior art solutions.

US 5809405 describes a transmitter receiver apparatus for a portable telephone handset which has two antennas. Two antenna duplexers which cover different frequency ranges can be switched to connect to one or other of the antennas.

WO0101582 describes a cellular radio telecommunications system base station having both sector antennas and adaptive phased array antennas in the same unit.

US 2005001765 describes a mobile communications system, in particular a combined beamforming diversity system using adaptive array antennas for a wireless fading channel environment.

The present invention discloses a RFID device according to claim 1.

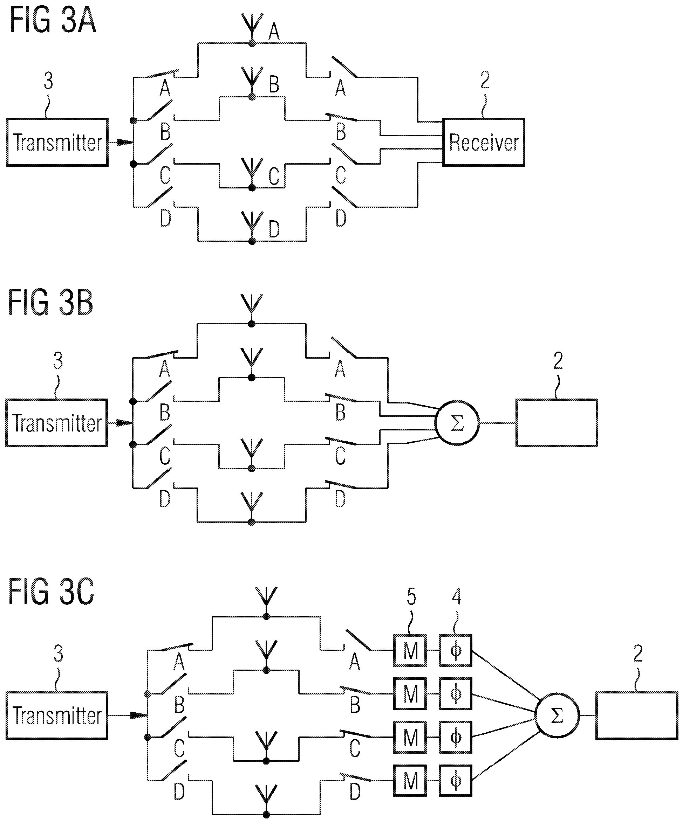

Figure 3 shows a basic embodiment of a reader 1 comprising a transmitter 2 and a receiver 3 both if which are connectable to a plurality of antennae A, B C D by means of a switching matrix 5. In general there are N antennae, where N=4, all of which can be used as a transmitting or receiving antenna.

In a basic embodiment of the operation of such a system, one antenna at a time is used for transmission and the switch matrix permits all the remaining antennas to be used as receivers. Having separate antenna for transmitting and receiving at any one time ensures high isolation, in a similar way to the figure 2 prior art embodiment. Thus if antenna A is being used to transmit, any of the antenna B C or D may be used to receive.

In a further variation in methodology more than one antenna may be used to receive the signal. If in the apparatus and example of figure 3a, antenna A is being used as the transmitting antenna, then antenna B is used to receive.

Any combination of transmitters B, C or D may be used. For example B+C or B+D or C+ D. Additional all the antenna B+ C + D may be used to receive the signal. The signals coming into the receiving unit from all antennae B C & D are effectively summed; this is shown schematically in figure 3a. Figure 3b shows such an enhanced system of the invention where the receiving antennas are summed before being fed into the receiving unit.

Figure 3c shows a further refined embodiment of the invention. A drawback of the figure 3b arrangement is that although unlikely, it may be that occasionally the signals received at the antennae may be out of phase and/or have different strength. This may lead to the signals cancelling each other out to a certain extent. In a preferred embodiment the signals of the antenna used for receiving are combined coherently. By is meant the received signals from the antenna are rotated in phase so as to make sure they are all in the same phase by phase rectification units 4. Additionally the magnitudes of the signals are amplified by an appropriate scaling factors (amplifiers 5) to ensure that they each have equal weighting.

## Claims

1. A radio frequency identification device (RFID) apparatus comprising a transmitter portion (3), a receiver portion (2); a plurality of antennas comprising at least four antennas (A, B, C, D) and a switching matrix;
**Characterised in that**:
each antenna is selectively connectable via the switching matrix to both the receiver portion and the transmitter portion;
wherein the apparatus is arrangeable in a first configuration wherein one or more of the plurality of antennas is connected via the switching matrix to the transmitter portion as a transmitting antenna and the remaining ones of the plurality of antennas are connected via the switching matrix to the receiver portion as receiving antennas.

2. Apparatus according to claim 1, wherein two or more antennas (A, B) are transmitting antennas.

3. Apparatus according to any preceding claim, wherein two or more of the remaining antennas (C,D) are used as receiving antennas.

4. Apparatus according to any preceding claim, wherein the output of the receiving antennas is summed (L) to a receiving unit (2).

5. Apparatus according to any preceding claim, wherein the apparatus further comprises phase rectification units (4) to ensure that all the signals from the antennas are in phase.

6. Apparatus according to any preceding claim, further comprising scaling units (5) to scale the signals from each antenna (A, B, C, D), so as to have the same signal strength.

7. A method of transmitting and receiving signals comprising the steps of providing a radio frequency identification device transceiver comprising isolated receiver (2) and transmitter (3) portions, transmitting a signal via at least one antenna (A, B, C, D) and receiving a signal from a second antenna (A, B, C, D),;
**Characterised in that**:
each antenna is selectively connectable to said transmitter and/or receiver portions via a switching matrix, wherein a plurality of antennas comprising at least four antennas are used to transmit or receive the signals, and wherein the apparatus is arranged in a first configuration wherein one or more of the plurality of antennas is connected via the switching matrix to the transmitter portion as a transmitting antenna, the remaining antennas of the plurality of antennas are connected via the switching matrix to the receiver portion as receiving antennas.

8. A method as claimed in claim 7 wherein said received signal is a reflection of the transmitted signal.

9. A method as claimed in claim 7 or claim 8, wherein said received signal is the transmitted signal modulated.

10. A method as claimed in any of claims 7 to 9, wherein a plurality of antennas (A, B, C, D) are used to transmit or receive the signals.

11. A method as claimed in claim 10, wherein the received signals are summed (L).

12. A method as claimed in claim 10 wherein the received signals are scaled (5) or phase shifted (4) to ensure that they are in the same phase.

13. A method of identifying a tag comprising employing the method of any of claims 7 to 12.

## Patentansprüche

1. Radio Frequency Identification (RFID)-Vorrichtung, welche einen Senderabschnitt (3), einen Empfängerabschnitt (2), eine Vielzahl von Antennen, die wenigstens vier Antennen (A, B, C, D) umfasst, und eine Schaltmatrix umfasst;
**dadurch gekennzeichnet, dass**:
jede Antenne über die Schaltmatrix selektiv sowohl mit dem Empfängerabschnitt als auch dem Senderabschnitt verbindbar ist;
wobei die Vorrichtung in einer ersten Konfiguration angeordnet werden kann, in der eine oder mehrere der Vielzahl von Antennen über die Schaltmatrix mit dem Senderabschnitt als eine Sendeantenne verbunden sind und die übrigen der Vielzahl von Antennen über die Schaltmatrix mit dem Empfängerabschnitt als Empfangsantennen verbunden sind.

2. Vorrichtung nach Anspruch 1, wobei zwei oder mehr Antennen (A, B) Sendeantennen sind.

3. Vorrichtung nach einem der vorhergehenden Ansprüche, wobei zwei oder mehr der übrigen Antennen (C, D) als Empfangsantennen verwendet werden.

4. Vorrichtung nach einem der vorhergehenden Ansprüche, wobei die Ausgänge der Empfangsantennen summiert (L) und einer Empfangseinheit (2) zugeführt werden.

5. Vorrichtung nach einem der vorhergehenden Ansprüche, wobei die Vorrichtung ferner Phasengleichrichtungseinheiten (4) umfasst, um sicherzustellen, dass alle Signale von den Antennen in Phase sind.

6. Vorrichtung nach einem der vorhergehenden Ansprüche, welche ferner Skaliereinheiten (5) umfasst, um die Signale von jeder Antenne (A, B, C, D) zu skalieren, so dass sie dieselbe Signalstärke haben.

7. Verfahren zum Senden und Empfangen von Signalen, welches die Schritte des Bereitstellens eines Radio Frequency Identification Device Sendeempfängers, der einen Empfänger-(2) und einen Senderabschnitt (3), die voneinander isoliert sind, umfasst, des Sendens eines Signals über wenigstens eine Antenne (A, B, C, D) und des Empfangens eines Signals von einer zweiten Antenne (A, B, C, D) umfasst;
**dadurch gekennzeichnet, dass**:
jede Antenne selektiv mit dem Sender- und/oder Empfängerabschnitt über eine Schaltmatrix verbindbar ist,
wobei eine Vielzahl von Antennen, die wenigstens vier Antennen umfasst, verwendet wird, um die Signale zu senden oder zu empfangen, und wobei die Vorrichtung in einer ersten Konfiguration angeordnet ist, in der eine oder mehrere der Vielzahl von Antennen über die Schaltmatrix mit dem Senderabschnitt als eine Sendeantenne verbunden sind und die übrigen Antennen der Vielzahl von Antennen über die Schaltmatrix mit dem Empfängerabschnitt als Empfangsantennen verbunden sind.

8. Verfahren nach Anspruch 7, wobei das empfangene Signal eine Reflexion des gesendeten Signals ist.

9. Verfahren nach Anspruch 7 oder Anspruch 8, wobei das empfangene Signal das modulierte gesendete Signal ist.

10. Verfahren nach einem der Ansprüche 7 bis 9, wobei eine Vielzahl von Antennen (A, B, C, D) verwendet wird, um die Signale zu senden oder zu empfangen.

11. Verfahren nach Anspruch 10, wobei die empfangenen Signale summiert (L) werden.

12. Verfahren nach Anspruch 10, wobei die empfangenen Signale skaliert (5) oder phasenverschoben (4) werden, um sicherzustellen, dass sie miteinander in Phase sind.

13. Verfahren zum Identifizieren eines Etiketts, welches die Anwendung des Verfahrens nach einem der Ansprüche 7 bis 12 umfasst.

## Revendications

1. Appareil à dispositif d'identification par radiofréquence (RFID) comprenant une partie émettrice (3), une partie réceptrice (2), une pluralité d'antennes comprenant au moins quatre antennes (A, B, C, D) et une matrice de commutation, **caractérisé en ce que** :
chaque antenne peut être connectée sélectivement au moyen de la matrice de commutation tant à la partie réceptrice qu'à la partie émettrice,
étant entendu que l'appareil peut être agencé dans une première configuration dans laquelle une ou plusieurs antennes de la pluralité d'antennes sont connectées, au moyen de la matrice de commutation, à la partie émettrice sous la forme d'une antenne émettrice et les antennes restantes de la pluralité d'antennes sont connectées, au moyen de la matrice de commutation, à la partie réceptrice sous la forme d'antennes réceptrices.

2. Appareil selon la revendication 1, étant entendu que deux ou plusieurs antennes (A, B) sont des antennes émettrices.

3. Appareil selon l'une quelconque des revendications précédentes, étant entendu que deux ou plusieurs des antennes restantes (C, D) sont utilisées comme antennes réceptrices.

4. Appareil selon l'une quelconque des revendications précédentes, étant entendu que la sortie des antennes réceptrices est sommée (L) en une unité réceptrice (2).

5. Appareil selon l'une quelconque des revendications précédentes, étant entendu que l'appareil comprend par ailleurs des unités redresseuses de phase (4) pour garantir que tous les signaux provenant des antennes soient en phase.

6. Appareil selon l'une quelconque des revendications précédentes, comprenant par ailleurs des unités de mise à l'échelle (5) pour mettre à l'échelle les signaux de chaque antenne (A, B, C, D) de sorte à avoir la même intensité de signal.

7. Procédé d'émission et de réception de signaux comprenant les étapes consistant à mettre à disposition un émetteur-récepteur à dispositif d'identification par radiofréquence comprenant des parties réceptrice (2) et émettrice (3) isolées, à émettre un signal au moyen d'au moins une antenne (A, B, C, D) et à recevoir un signal d'une deuxième antenne (A, B, C, D),
**caractérisé en ce que** :
chaque antenne peut être connectée sélectivement auxdites parties émettrice et/ou réceptrice au moyen d'une matrice de commutation, étant entendu qu'une pluralité d'antennes comprenant au moins quatre antennes sont utilisées pour émettre ou recevoir les signaux et étant entendu que l'appareil est agencé dans une première configuration dans laquelle une ou plusieurs antennes de la pluralité d'antennes sont connectées, au moyen de la matrice de commutation, à la partie émettrice sous la forme d'une antenne émettrice et les antennes restantes de la pluralité d'antennes sont connectées, au moyen de la matrice de commutation, à la partie réceptrice sous la forme d'antennes réceptrices.

8. Procédé selon la revendication 7 étant entendu que ledit signal reçu est une réflexion du signal émis.

9. Procédé selon la revendication 7 ou la revendication 8, étant entendu que ledit signal reçu est le signal émis modulé.

10. Procédé selon l'une quelconque des revendications 7 à 9, étant entendu que l'on utilise une pluralité d'antennes (A, B, C, D) pour émettre ou recevoir les signaux.

11. Procédé selon la revendication 10, étant entendu que les signaux reçus sont sommés (L).

12. Procédé selon la revendication 10 étant entendu que les signaux reçus sont mis à l'échelle (5) ou déphasés (4) pour garantir qu'ils soient dans la même phase.

13. Procédé d'identification d'une étiquette consistant à employer le procédé selon l'une quelconque des revendications 7 à 12.
